(19) Europäisches Patentamt
European Patent Office
Office européen des brevets

(11) **EP 2 690 072 B1**

(12) **EUROPEAN PATENT SPECIFICATION**

(45) Date of publication and mention
of the grant of the patent:
**04.12.2019 Bulletin 2019/49**

(51) Int Cl.:
**C03B 18/18** (2006.01) **C03B 18/20** (2006.01)

(21) Application number: **12760141.7**

(86) International application number:
**PCT/JP2012/057058**

(22) Date of filing: **19.03.2012**

(87) International publication number:
**WO 2012/128261 (27.09.2012 Gazette 2012/39)**

(54) **FLOAT GLASS AND PROCESS FOR PRODUCING SAME**

FLOATGLAS UND VERFAHREN ZU SEINER HERSTELLUNG

VERRE FLOTTÉ, ET PROCÉDÉ DE FABRICATION DE CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.03.2011 JP 2011065086**

(43) Date of publication of application:
**29.01.2014 Bulletin 2014/05**

(73) Proprietor: **AGC Inc.
Tokyo 100-8405 (JP)**

(72) Inventors:
• **HAYASHI, Yasuo
Tokyo 100-8405 (JP)**
• **MIURA, Takenori
Tokyo 100-8405 (JP)**
• **MIYASAKA, Satoshi
Tokyo 100-8405 (JP)**

(74) Representative: **Müller-Boré & Partner
Patentanwälte PartG mbB
Friedenheimer Brücke 21
80639 München (DE)**

(56) References cited:
WO-A1-2007/063251    WO-A1-2010/073799
JP-A- 2006 513 118    JP-A- 2010 053 032
US-A1- 2004 110 625    US-A1- 2007 227 190

• **PILKINGTON: "The Float Glass Process", PROC.
ROYAL SOC. LOND. A, vol. 314, 16 December
1969 (1969-12-16), pages 1-25, XP008170557,
DOI: 10.1098/rspa.1969.0212**
• **Thomas P. Seward III and Terese Vascott: "High
Temperature Glass Melt Property Database for
Process Modeling", 2005, The American Ceramic
Society, XP055538863, * page 28; table II ***

**Description**

The present invention relates to a float glass and a method for manufacturing the same.

A float glass is manufactured by causing a molten glass continuously supplied onto a molten tin in a bath to flow on the molten tin toward an outlet of the bath, and then being molded in a band sheet shape (for example, refer to Patent Document 1). The molten glass is cooled while it flows inside the bath in a predetermined direction, lifted from the molten tin in the vicinity of the outlet of the bath, and then formed as a float glass.

Patent Document 1: JP-A-2009-84073

L. A. B. Pilkington describes a float glass process (in Proc. Roy. Soc. Lond. A., vol. 314, pages 1 to 25).

US 2007/0227190 A1 describes an apparatus and methods for producing float glass having a reduced defect density.

The molten glass supplied to the bath is generally manufactured by introducing powdery glass materials into a melting furnace. The melting furnace has a plurality of burners shooting out flames therein, thereby melting the glass materials with radiation heat from the flames shot from each burner.

In general, flames shot in a melting furnace are combusted by mixing heavy oil and air, however, in recent years, using natural gas instead of heavy oil and using oxygen gas instead of air have been discussed for the purpose of improving thermal efficiency and reducing the discharge amounts of $CO_2$ or $NO_x$.

As a result of the discussion by the present inventors, when natural gas is used instead of heavy oil, and/or when oxygen gas is used instead of air, it was found that a number of defects (depressions having diameters of dozens $\mu$m to several mm) are generated on the bottom surface (that is, the surface in contact with the molten tin) of the float glass.

The present invention takes the above problem into consideration, and has an object to provide high-quality float glass and a method for manufacturing the same.

In order to solve the above-mentioned problem, the present invention provides a float glass as characterized in claim 1.

Additionally, the present invention provides a method for manufacturing a float glass as characterized in claim 2.

In the method for manufacturing a float glass according to the above-mentioned invention, a concentration of hydrogen gas in an atmosphere inside the bath may be adjusted so that the amount of water eluted from the molten glass to the molten tin in the bath becomes 0.5% or lower of the amount of water in the molten glass immediately before flowing into the bath.

In the method for manufacturing a float glass according to the above-mentioned invention, a concentration of water in the molten glass immediately before flowing into the bath may be 470 mass ppm or more.

According to the present invention, it is possible to provide high-quality float glass and a method for manufacturing the same.

Fig. 1 is an illustrative diagram of a method for manufacturing a float glass according to an embodiment of the present invention, and is a plan view of an internal structure of a bath.

Fig. 2 is a cross-sectional view of a side of the bath of Fig. 1.

Fig. 3 is an illustrative diagram of a method for manufacturing a sample used to measure physical properties of the float glass.

Fig. 4 is a graph of an example of distribution of β-OH in the float glass, which is calculated based on a measurement result of micro FT-IR.

Fig. 5 is a graph of an example of distribution of the concentration of water in the float glass, which is calculated based on a measurement result of micro FT-IR.

Fig. 6 is a graph of an example of distribution of counted ratios (hydrogen atoms/silicon atoms) in the float glass based on a measurement result of SIMS.

Fig. 7 is a graph of an example of distribution of the concentration of water in the float glass, which is calculated based on a measurement result of micro FT-IR and a measurement result of SIMS.

Hereinafter, embodiments for implementing the present invention will be described with reference to drawings. The present invention is not limited to the embodiments to be described below. Various modifications and substitutions can be added to the following embodiments without departing from the scope of the present invention.

The type of a float glass of the present embodiment is, for example, soda-lime glass, but the type of float glass of the present invention is not limited, and may be, for example, an alkali-free glass.

(Float glass)

A float glass is manufactured by causing a molten glass continuously supplied onto a molten tin in a bath to flow on the molten tin toward an outlet of the bath. The molten glass is cooled while it flows inside the bath in a predetermined direction, lifted from the molten tin in the vicinity of the outlet of the bath, and then formed as a float glass.

After the float glass is drawn from the outlet of the bath, the glass is transported to an annealing furnace so as to be gradually cooled. Next, both of the edge parts (so-called ear parts) of the float glass are cut out. Then, predetermined dimensions of the float glass is cut by a cutting machine, and then released as a product

Note that the bottom surface and the top surface are not polished in the present embodiment.

Meanwhile, with regard to the concentration of water in the float glass in the vicinity of the bottom surface, the concentration of water tends to gradually decrease toward the bottom surface. This is because the water contained in the molten glass in the bath is eluted to the molten tin via the bottom surface. On the other hand, since the concentration of water contained in the float glass at a position located sufficiently apart from the bottom surface toward the top surface, for example, around the middle point between the bottom surface and the top surface, is substantially constant, the water does not come out.

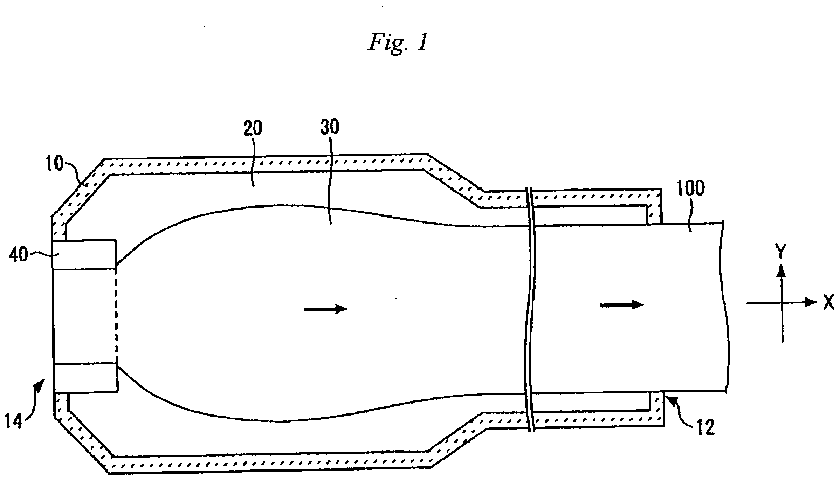

Thus, when cuboid float glass having a length of 1 cm and a width of 1 cm is manufactured, if the amount of water contained in molten glass immediately before flowing into the bath (hereinafter, also referred to as an "initial amount") is set to be A1(g), A1 is calculated from the following formula (3). It should be noted that the "length" means a dimension in the direction X of Fig. 1, and the "width" means a dimension in the direction Y of Fig. 1.
[Math. 3]

$$A1 = Ca \times D \times \frac{\rho}{10^4} \quad \cdots (3)$$

In the formula (3), D denotes the distance between both main surfaces of the float glass (in other words, the sheet thickness of the float glass) ($\mu$m), Ca denotes the concentration of water at a position between both main surfaces of the float glass in which the concentration of water becomes maximum (mass ppm) (in other words, the concentration of water that is substantially constant at a position located sufficiently apart from the bottom surface toward the top surface), and $\rho$ denotes the density of the float glass (g/cm$^3$). A measuring method of the concentration of water Ca will be described later. It should be noted that, in the formula (3), $10^4$ is for converting the unit of D "$\mu$m" into "cm."

In addition, when the cuboid float glass having a length of 1cm and a width of 1 cm is manufactured, if the amount of water eluted from the molten glass to the molten tin (hereinafter, also referred to as an "amount of elution") is set to be A2(g), A2 is calculated from the following formula (4).
[Math. 4]

$$A2 = \int_0^{Da} (Ca - C(x)) \frac{\rho}{10^4} dx \quad \cdots (4)$$

+/-1n the formula (4), x denotes the distance ($\mu$m) from the first surface (bottom surface) which is one surface of both main surfaces of the float glass and is positioned on a side of the molten tin in the bath to an arbitrary position in the sheet thickness direction toward the second surface (top surface) which is the other surface, C(x) denotes a function of the concentration of water (mass ppm) having x as a variable, and Da denotes the distance from the first surface (bottom surface) to a position in which the concentration of water is the maximum in the sheet thickness direction between the both main surfaces of the float glass. A measuring method of the function C(x) of the concentration of water will be described later. In the formula (4), x, D, Ca, and $\rho$ have the same meaning as those in the formula (3). It should be noted that, in the formula (4), $10^4$ is for converting the unit of x "$\mu$m" into "cm."

The float glass of the present embodiment is characterized in that A calculated from the following formula (5) is 0.5% or lower. A denotes a ratio of the amount of elution A2 to the initial amount A1 (%).
[Math. 5]

$$A = \frac{A2}{A1} \times 100 = \frac{\int_0^{Da} (Ca - C(x)) dx}{Ca \times D} \times 100 \quad \cdots (5)$$

Since a float glass having a ratio A being 0.5% or lower, which will be described later in detail, has a bottom surface with little defects, the float glass has excellent advantages in quality and manufacturing cost. The ratio A is preferably 0.47% or lower, and more preferably 0.45% or lower.

As the initial amount A1 increases, the amount of elution A2 increases, accordingly, defects easily arises, and thus, in such a case, an effect of the present invention is noticeable. Thus, the concentration of water Ca that serves as the index of the initial amount A1 is 470 (mass ppm) or more, since a noticeable effect can be obtained, and is preferable 490 (mass ppm) or more. In addition, when the values are expressed for β-OH, to be described later, that serves as the index of the concentration of water Ca with regard to soda-lime glass, the invention is preferable when the value is 0.26 mm$^{-1}$ or more, and is particularly preferable when the value is 0.27 mm$^{-1}$ or more.

There is no limitation on the thickness of a float glass product, however, the thickness is, for example, 0.1 mm to 25 mm, and preferably 0.5 mm to 25 mm.

High quality of a float glass with the above-described concentration of water is obvious based on the manufacturing method. Hereinafter, the manufacturing method will be described.

(Manufacturing method of float glass)

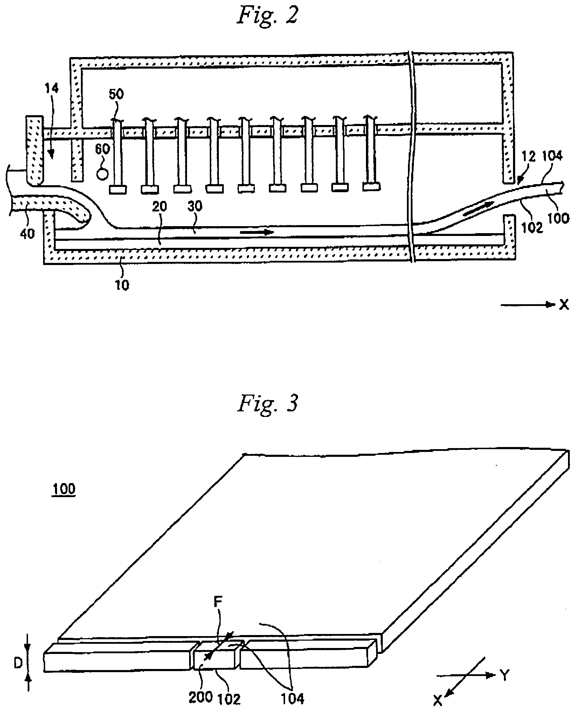

Fig. 1 is an illustrative diagram of a manufacturing method of a float glass according to an embodiment of the present invention, showing a plan view of an internal structure of a bath. Fig. 2 is a cross-sectional view of a side of the bath of Fig. 1.

A float glass 100 is manufactured by causing a molten glass 30 continuously supplied onto a molten tin 20 in a bath 10 to flow on the molten tin 20 toward an outlet 12 of the bath 10, and then being molded in a band sheet shape. The molten glass 30 is cooled while flowing inside the bath 10 in the direction X, lifted from the molten tin 20 in the vicinity of the outlet 12 of the bath 10, and then formed as the float glass 100.

The float glass 100 is drawn from the outlet 12 of the bath 10, transported to an annealing furnace so as to be gradually cooled. Next, both of the edge parts (so-called ear parts) of the float glass 100 are cut out. Then, predetermined dimensions of the float glass is cut by a cutting machine, and then released as a product.

It should be noted that the bottom surface 102 and the top surface 104 are not polished in the present embodiment.

In the bath 10, a spout lip 40, a plurality of heaters 50, a gas supply pipe 60, and the like are provided. The spout lip 40 is provided in the vicinity of the inlet 14 of the bath 10, serving as a supply path for supplying the molten glass 30 to the bath 10. The spout lip 40 is connected to a melting furnace for melting powdery glass materials. For this reason, the temperature of the molten glass 30 flowing into the bath 10 can be adjusted according to the output of a burner provided in the melting furnace, the output of the heaters provided in the vicinity of the spout lip 40, or the like.

The plurality of heaters 50 are suspended from the ceiling of the bath 10 as shown in, for example, Fig. 2, for heating inside the bath 10. The plurality of heaters 50 are provided in a matrix state, for example, in the flowing direction (direction X) and the width direction (direction Y) of the molten glass 30. Distribution of temperatures of the molten tin 20 and the molten glass 30 inside the bath 10 can be adjusted according to the output of the plurality of heaters 50, and the like, and is set so that the temperatures become lower in the direction of the outlet 12 of the bath 10.

The gas supply pipe 60 supplies reducing gas into the bath 10, and for example, supplies reducing gas into the bath 10 from a side wall of the bath 10 as shown in Fig. 2, or from the ceiling of the bath 10. Reducing gas includes nitrogen ($N_2$) gas, hydrogen ($H_2$) gas, and the like, and is blown into the bath 10 after being pre-heated to a predetermined temperature. The concentration of hydrogen gas is preferably 15 volume% or lower. Hydrogen gas suppresses oxidization of the molten tin 20 by reacting with oxygen gas incorporated into the bath 10. The concentration of hydrogen in the atmosphere inside the bath 10 can be adjusted according to the output of the gas supply pipe 60, a change in the type of reducing gas, or the like.

The concentration of water inside the molten glass 30 flowing into the bath 10 can be determined based on the concentration of water in the atmosphere inside the melting furnace, or the like. As the concentration of water in the atmosphere inside the melting furnace increases, the concentration of water inside the molten glass 30 in the melting furnace increases, and thus, the concentration of water inside the molten glass 30 flowing into the bath 10 from the melting furnace increases.

In recent years, for the purpose of improving thermal efficiency in a melting furnace, in addition, of reducing the discharge amounts of $CO_2$ and $NO_x$, using natural gas instead of heavy oil and using oxygen gas instead of air in order to shoot flames in the melting furnace have been discussed. When natural gas is used instead of heavy oil, and/or oxygen gas is used instead of air, the concentration of water in the atmosphere inside the melting furnace increases, and accordingly, the amount of water in the molten glass 30 immediately before flowing into the bath 10 (in other words, the above-described initial amount A1) increases. When the initial amount A1 increases, the amount of water eluted from the molten glass 30 to the molten tin 20 in the bath 10 (in other words, the above-described amount of elution A2) easily increases.

In the present embodiment, the amount of elution A2 is set to be 0.5% or lower (preferably 0.47% or lower, and more preferably 0.45% or lower) of the initial amount A1. Accordingly, the amount of gas components (for example, the amount of hydrogen and the amount of oxygen) dissolved in the molten tin 20 can be suppressed so as to be smaller than the saturation amount thereof. The saturation amount is determined based on the temperature of the molten tin 20, and as the temperature of the molten tin 20 becomes lower, the saturation amount becomes lower. Particularly, a ratio of the amount of production of float glass per day (ton/day) with respect to the molten tin 20 (ton) is preferably 300% to 600%.

According to the present embodiment, since the amount of gas components dissolved in the molten tin 20 can be suppressed to be lower than the saturation amount, precipitation of gas components from the molten tin 20 due to oversaturation can be suppressed in the course of flowing the molten tin 20 along the molten glass 30 in the bath 10 in the direction X and cooling. Thus, occurrence of defects (depressions having diameters of dozens $\mu$m to several mm) on the contact surface of the molten glass 30 with the molten tin 20 in a midstream or a down-stream region in the bath 10 can be suppressed, and thus, the quality of the bottom surface 102 of the float glass 100 can be improved.

As the initial amount A1 increases, the amount of elution A2 increases, thus, defects easily occurs, and thus, the effect of the present invention is noticeable in such a case. Thus, the present invention is preferable since the effect thereof is noticeable when the concentration of water Ca that serves as an index of the initial amount A1 is 470 (mass ppm) or more, and is particularly preferable when the concentration of water is 490 (mass ppm) or more. In addition, when the values are expressed for $\beta$-OH to be described later, that serves as the index of the concentration of water Ca with regard to soda-lime glass, the invention is preferable when the value is 0.26 mm$^{-1}$ or more, and is particularly preferable when the value is 0.27 mm$^{-1}$ or more.

In the present embodiment, the temperature of the molten tin 20 in the bath 10 and/or the temperature of the molten glass 30 in the bath 10 is/are adjusted so that the amount of elution A2 becomes 0.5% or less of the initial amount A1 (preferably 0.47% or less, and more preferably 0.45% or less). Such adjustment of temperature is effective when it is performed in an up-stream region in the bath 10. This is because the amount of gas components precipitated from the molten tin 20 due to oversaturation in the midstream or the down-stream region in the bath 10 is determined based on the amount of gas components dissolved in the molten tin 20 in the up-stream region in the bath 10. Here, the "up-stream region in the bath 10" refers to all regions on the up-stream side of the position 160 inches (equivalent to 406 cm) apart from the end (down-stream end) of the spout lip 40 in the direction X.

When the temperature of the molten tin 20 in the up-stream region in the bath 10 is set to be T1 (°C), as the temperature T1 becomes lower, the amount of saturated gas components dissolved in the molten tin 20 decreases, and the reaction speed of the molten tin 20 and the molten glass 30 becomes slower, and accordingly, the amount of elusion decreases.

The temperature T1 can be adjusted according to the output of the burner shooting flames in the melting furnace, the output of the heater provided in the vicinity of the spout lip 40, or the output of the heaters 50 provided in the bath 10. In addition, the temperature can also be adjusted according to the installation of a cooling body (cooler).

In addition, when the temperature of the molten glass 30 in the up-stream region in the bath 10 is set to be T2 (°C), as the temperature T2 becomes lower, the reaction speed of the molten glass 30 and the molten tin 20 becomes slower, and accordingly, the amount of elution decreases.

The temperature T2 is set according to the type, thickness, or the like of the float glass 100. The temperature T2 can be adjusted according to the output of the burner shooting flames in the melting furnace, the output of the heater (for example, a platinum heater) provided in the vicinity of the spout lip 40, or the output of the heaters 50 provided in the bath 10. In addition, the temperature can also be adjusted according to the installation of a cooling body (cooler).

In addition, the concentration of hydrogen gas in the atmosphere in the bath 10 may be adjusted so that the amount of elution A2 becomes 0.5% or lower of the initial amount A1 (preferably 0.47% or lower, and more preferably 0.45% or lower). When the concentration of hydrogen gas in the atmosphere in the up-stream region in the bath 10 is set to be U (volume %), as the concentration of hydrogen gas U becomes higher, the concentration of hydrogen gas dissolved in the molten tin 20 increases, and accordingly, the amount of elution easily decreases.

The concentration of hydrogen gas U is set according to the type, the thickness or the like of the float glass 100. In the case of soda-lime glass, for example, the concentration of hydrogen gas U is preferably 5 (volume%) or more, and more preferably 10 (volume%) or more. It should be noted that the concentration of hydrogen gas U is preferably 15 (volume%) or lower in light of cost.

The concentration of hydrogen gas U can be adjusted according to the output of the gas supply pipe 60 that supplies reducing gas into the bath 10, or the type of the reducing gas.

It should be noted that, in the present invention, besides the above, for example, an additive may be added to the molten tin 20 in order to suppress the amount of elution to be low.

(Measuring method of a ratio of the amount of elution to the initial amount)

A ratio of the amount of elution A2 to the initial amount A1 is measured from distribution of concentrations of water contained in the float glass 100 as a product. When the ratio of the amount of elution A2 to the initial amount A1 is set to be A(%), the ratio A is calculated from the above-described formula (5).

In order to calculate the ratio A, the concentration of water Ca and the function C(x) of the concentration of water are obtained. A sample 200 used to obtain the function C(x) of the concentration of water is prepared by slicing the sample from an end of the float glass 100 with the non-polished bottom surface 102 so as to have the sheet thickness F and then cutting out the sample from the center of the float glass 100 in the width direction (direction Y) as shown in Fig. 3. The sheet thickness direction of the sample 200 is orthogonal to the sheet thickness direction of the float glass 100, and the outer circumferential surfaces of the sample 200 include the bottom surface 102 and the top surface 104 of the float glass 100. It should be noted that a sample used to obtain the concentration of water Ca is prepared by polishing the bottom surface 102 and the top surface 104 of the float glass 100, and then chipping out the portion having the maximum concentration of water (portion in which the concentration of water is constant).

The concentration of water Ca is obtained by measuring an IR spectrum at a position in which the concentration of water (concentration of water before the correction) obtained by using a micro FT-IR (Fourier Transform Infrared Spectrophotometer), to be described later, is at the maximum level (substantially constant) using a macro FT-IR. Specifically, based on the measurement result of the IR spectrum, a value of $\beta$-OH Ea (mm$^{-1}$) serving as an index of the concentration of water is calculated from the following formula (6). Next, Ca is calculated by applying the calculated value Ea to the following formula (7).
[Math. 6]

$$Ea = \frac{10^3}{F} \times log_{10}\left(\frac{B1}{B2}\right) \quad \cdots (6)$$

In the formula (6), F denotes a sheet thickness ($\mu$m) of the sample 200, and for example, F=100 ($\mu$m). In addition, in the formula (6), B1 denotes a transmittance (%) of the sample 200 in a reference wavenumber of 4000/cm, and B2 denotes a minimum transmittance (%) of the sample 200 around a hydroxyl group absorption wavenumber of 3600/cm. It should be noted that, in the formula (6), $10^3$ is used to convert the unit of F "$\mu$m" into "mm."
[Math. 7]

$$Ca = \frac{Ea}{\varepsilon} \times \frac{G}{\rho} \times 10^4 \cdots (7)$$

In the formula (7), G denotes the molar mass of water (G=18 (g/mol)), $\varepsilon$ denotes a molar extinction coefficient of glass (L/mol·cm), and $\rho$ denotes density of glass (g/cm$^3$). $\varepsilon$ and $\rho$ differ depending on the type of glass, but in the case of soda-lime glass, $\varepsilon$=40 (L/mol·cm), and $\rho$=2.5 (g/cm$^3$) in general. It should be noted that, in the formula (7), $10^4$ is used to convert the unit of Ea "mm$^{-1}$" to "cm$^{-1}$," and is obtained by multiplying "$10^{-2}$" that is used to convert the unit of $\varepsilon$ "L/mol·cm" into "cm$^2$/mol" by "$10^6$" that is used to express the concentration of water Ca with "mass ppm."

The function C(x) of the concentration of water is calculated based on the measurement result of the micro FT-IR and the measurement result of a Secondary Ion Mass Spectrometer (SIMS).

Specifically, first, the IR spectrum of the sample 200 is measured at an interval of 10 $\mu$m in the direction from the bottom surface 102 to the top surface 104 using the micro FT-IR, $\beta$-OP is calculated at each measurement point in the same manner as described above, and the result is converted into the concentration of water. The measurement start point is set to be the position of x=50 ($\mu$m) in consideration of the performance of the micro FT-IR. In addition, the measurement end point may be the position in which the concentration of water is constant, and is set to be the position, for example, of x=1000 ($\mu$m). The measurement end point may be the position of approximately x=D/2 ($\mu$m) (in other words, the center of the sheet thickness). It should be noted that the concentration of water becomes higher in the direction from the bottom surface 102 to the top surface 104, and when there is no position in which the concentration of water is substantially constant, for example, in the case of thin float glass having a sheet thickness of 0.1 mm, the measurement end point may be the position in which the concentration of water is the maximum, in other words, a position in the vicinity of the top surface 104.

The $\beta$-OH obtained by using the micro FT-IR is corrected with the $\beta$-OH obtained by using the macro FT-IR described above in order to increase reliability. When the $\beta$-OH at each measurement point before the correction is set to be B, the $\beta$-OH at the measurement end point before the correction or the average value of the $\beta$-OH at each measurement point at which the concentration of water is substantially constant is set to be B1, and the $\beta$-OP obtained by using the macro FT-IR is set to be B2, $\beta$-OH at each measurement point after the correction is expressed as B×B2/B1.

In addition, the concentration of water obtained by using the micro FT-IR is also corrected with $\beta$-OH obtained by using the macro FT-IR described above in the same manner.

An example of distribution of $\beta$-OH after the correction obtained by using the micro FT-IR is illustrated in Fig.

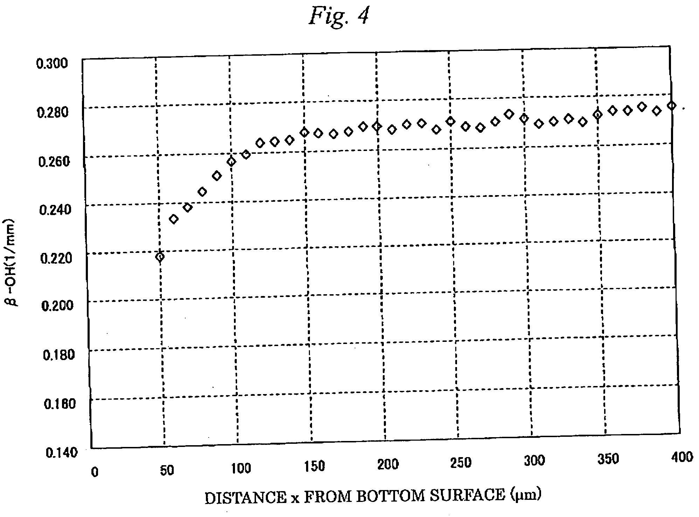

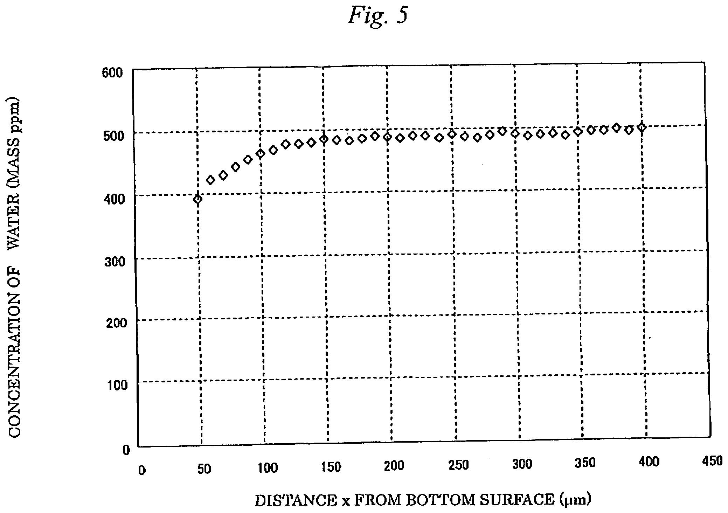

4, and an example of distribution of concentrations of water after the correction is illustrated in Fig. 5. It was found from Figs. 4 and 5 that the concentration of water is substantially constant in positions sufficiently apart from the bottom surface 102, and water is little eluted in the molten tin 20. In addition, it was found from Figs. 4 and 5 that the concentration of water becomes lower toward the bottom surface 102 in the vicinity of the bottom surface 102, and water is eluted to the molten tin 20.

Next, a count ratio of hydrogen (H) atoms and silicon (Si) atoms (hydrogen atoms/silicon atoms) in the sample 200 is measured at an interval of 0.02 $\mu$m in the direction from the bottom surface 102 to the top surface 104 of the float glass 100 using SIMS. The measurement start point is set to be the position of x=0.03 ($\mu$m). In addition, the measurement end point is set to be the position of x=36 ($\mu$m).

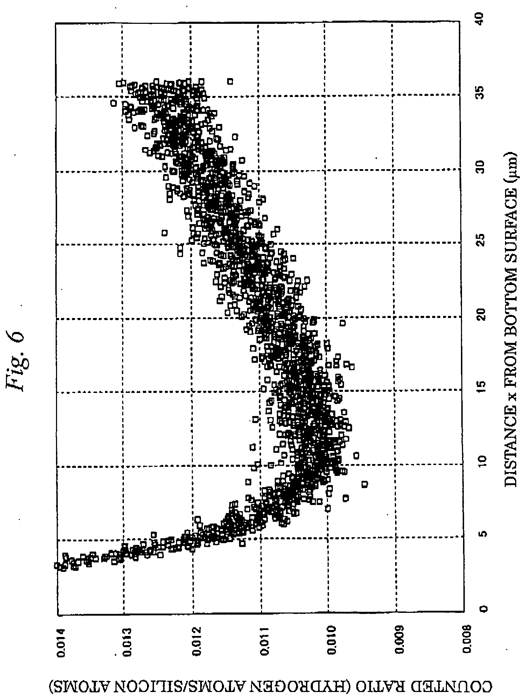

An example of distribution of the count ratio (hydrogen atoms/silicon atoms) in the float glass 100 based on the measurement result of SIMS is illustrated in Fig. 6. As is clear from Fig. 6, the count ratio (hydrogen atoms/silicon atoms) becomes lower toward the bottom surface 102 in a region 10 $\mu$m or more apart from the bottom surface 102, and thus, it was found that water is eluted to the molten tin 20.

As is clear from Fig. 6, however, the count ratio (hydrogen atoms/silicon atoms) becomes higher toward the bottom surface 102 in a region less than 10 $\mu$m apart from the bottom surface 102. It is presumed that this is because protons (hydrogen ions) separated from water vapor adhere to the bottom surface 102 of the float glass 100 and undergo ion exchange with sodium (Na) ions in the glass in the annealing furnace. Thus, the count ratio (hydrogen atoms/silicon atoms) at each measurement point less than 13 $\mu$m apart from the bottom surface 102 is not appropriate as an index indicating the amount of water, and excluded from the following process.

Next, each value H of the count ratios (hydrogen atoms/silicon atoms) at each measurement point is applied to the following formula (8), and the result is converted into a value E of $\beta$-OH(mm$^{-1}$).

[Math. 8]

$$E = \frac{H}{Ha} \times Ea \qquad \cdots (8)$$

In the formula (8), Ea denotes the value of $\beta$-OH (mm$^{-1}$) at the position in which the concentration of water is the maximum (position sufficiently apart from the bottom surface 102 in which the concentration of water is substantially constant), and is calculated from the formula (6) based on the measurement result of the macro FT-IR as described above.

In the formula (8), Ha denotes the value of the count ratio (hydrogen atoms/silicon atoms) at the position in which the concentration of water is the maximum (position sufficiently apart from the bottom surface 102 in which the concentration of water is substantially constant), and measured using SIMS. The number of measurement points of SIMS is set to be 1200, and the average value of the measurement results thereof is set to be Ha. Ea and Ha differ depending on the type of glass, but in the case of soda-lime glass, for example, Ea=0.271 (mm$^{-1}$) and Ha=0.0173.

Next, each value E of $\beta$-OH (mm$^{-1}$) calculated from the formula (8) is applied to the formula (9) described below, and the result is converted into a value J of the concentration of water (mass ppm).

[Math. 9]

$$J = \frac{E}{\varepsilon} \times \frac{G}{\rho} \times 10^4 \qquad \cdots (9)$$

In the formula (9), G, $\varepsilon$, and $\rho$ have the same meanings and the same values as those in the formula (7). In addition, in the formula (9), $10^4$ is used to convert the unit of E "mm$^{-1}$" to "cm$^{-1}$," and is obtained by multiplying "$10^{-2}$" that is used to convert the unit of $\varepsilon$ "L/mol·cm" into "cm$^2$/mol" by "$10^6$" that is used to express the concentration of water J with "mass ppm."

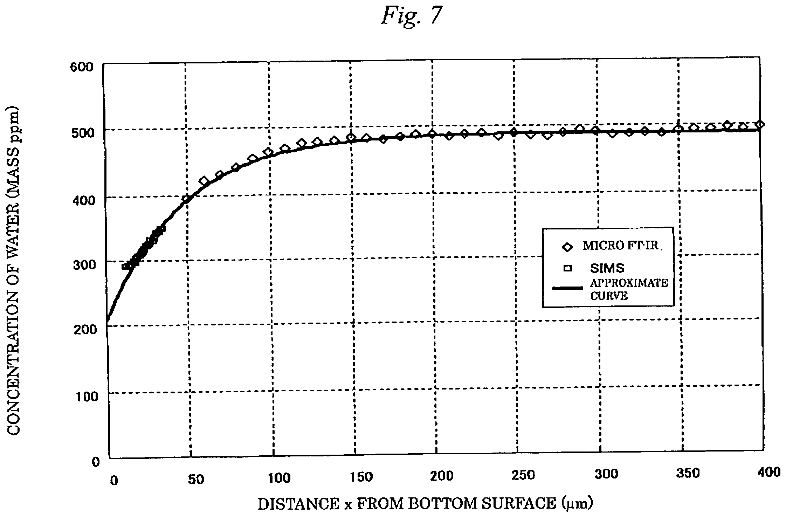

Next, by combining the concentration of water after the correction obtained by using the micro FT-IR with the concentration of water obtained by using SIMS, distribution of the concentration of water in the float glass 100 is obtained. The obtained result is shown in Fig. 7. In Fig. 7, "◇" indicates the values of the concentration of water after the correction obtained by using the micro FT-IR, and "□" indicates the values of the concentration of water obtained by using SIMS. Note that, since the values of the concentration of water obtained by using SIMS has a large error in Fig. 7, the values are set by movement average values at 10 points. It was found from Fig. 7 that the values of the concentration of water after the correction obtained by the micro FT-IR match the values of the concentration of water obtained by SIMS.

Next, variable parameters in the following formula (10) are obtained using a least squares method so that distribution of the concentrations of water in the float glass 100 has a minimum difference with the following formula (10) that is a model formula of the function C(x) of the distribution of the concentrations.
[Math. 10]

$$C(x) = Ca - K \times exp(-L \times x) \quad \cdots (10)$$

In the formula (10), Ca denotes the value of the concentration of water (mass ppm) at the position in which the concentration of water is the maximum (position sufficiently apart from the bottom surface 102 in which the concentration of water is substantially constant), and is calculated from the formula (6) and the formula (7) based on the measurement result by the macro FT-IR as described above.

In addition, in the formula (10), K and L are variable parameters. In Fig. 7, an approximate curve of K=282 (mass ppm) and L=0.021 ($\mu$m$^{-1}$) is indicated by a solid line.

In this manner, after C(x) and Ca are determined, A is calculated based on the formula (5). At this moment, integration according to sectional mensuration is performed based on the following formula (11).
[Math. 11]

$$\int_0^{Da} (Ca - C(x))\, dx = \sum_{i=0}^{n} \{(Ca - Ci) \times M\} \quad \cdots (11)$$

In the formula (11), Da denotes a distance ($\mu$m) from the bottom surface 102 to the position in which the concentration of water is the maximum in the sheet thickness direction between both main surfaces of the float glass. M denotes an interval ($\mu$m) of measurement points of the micro FT-IR, which is M=10. In addition, i denotes an integer from 0 to n, n denotes the number of measurement points of the micro FT-IR, and Ci denotes C(x) when x=i$\times$F. It should be noted that a value of n is not limited as long as it is set so that the concentration of water is kept to be substantially constant at the point of x=n$\times$F and the periphery thereof.

It should be noted that, in the present invention, the float glass 100 has the non-polished bottom surface 102.

If polishing is performed on a float glass to be used in a glass substrate for liquid crystal, the amount of elution as much as a polished sheet thickness is trivial and can be ignored, and thus the concentration of water as described above can be obtained. In addition, in the case of a float glass in use of which the bottom surface 102 is polished to the extent that the amount of elution of the polished sheet thickness cannot be ignored, the concentration of water is obtained in such a way that an approximate expression is obtained as described above, the approximate expression is extended for the polished sheet thickness, and then the amount of elution as much as the removed sheet thickness is estimated.

EXAMPLES

Hereinbelow, the present invention will be described in detail using examples, and the like, however, the present invention is not limited to the examples.

[Example 1 and Comparative Example 1]

In Example 1 and Comparative Example 1, float glasses having a product thickness of 5 mm were manufactured by causing a molten glass to flow on a molten tin toward an outlet of a bath in the same manner except that temperatures T1 and T2 of the molten tin and the molten glass in an up-stream region of the bath were changed. The type of the float glasses were set to be soda-lime glass.

Samples were cut out from the produced float glasses using the above-described method, and physical properties of the samples were measured using the following devices under the following measurement conditions.

(Macro FT-IR)

Device: FT-IR-8400 manufactured by Shimadzu Corporation
Number of scanning times: 70
Spectral resolution: 4 cm$^{-1}$

(Micro FT-IR)

Device: Micro FT-IR Nicolet iN10 manufactured by Thermo Fisher Sientific Inc.

Detector: Cooling type
Number of scanning times: 128
Spectral resolution: 16 cm$^{-1}$
Aperture: 10 $\mu$m for width, 150 $\mu$m for height, 0° for angle

(SIMS)

Device: ADEPT 1010 manufactured by ULVAC-PHI
Primary ion Cs+, negative ion detected
Accelerating voltage: 5 kV
Beam current: 1 $\mu$A
Raster size: 200×200 $\mu$m
Sample angle: 60°
Based on the measurement results, the value A(%) of the ratio of the amount of elution A2 to the initial amount A1, the value Ea (mm$^{-1}$) of β-OH at the position sufficiently apart from the bottom surface, in which the concentration of water is substantially constant, in this case, at the position 1000 $\mu$m apart from the bottom surface, and the value Ca (mass ppm) of the concentration of water at the same position 1000 $\mu$m apart from the bottom surface were calculated in the above-described method. In addition, the presence or absence of defects (depressions having a short diameter of 1.5 mm or greater) on the bottom surface of each float glass produced was visually checked. The results and the molding conditions of the float glass are shown in Table 1.

[Table 1]

| | | Example 1 | Comparative Example 1 |
|---|---|---|---|
| Molding conditions | Product thickness (mm) | 5 | 5 |
| | Temperature T1 (°C) | 1004 | 1051 |
| | Temperature T2 (°C) | 1030 | 1060 |
| | Concentration of hydrogen gas U | 3 | 3 |
| Results | Ratio A of the amount of elution to the initial amount (%) | 0.45 | 0.62 |
| | β-OH Ea at the sheet thickness center (mm$^{-1}$) | 0.27 | 0.27 |
| | Concentration of water Ca at the sheet thickness center (mass ppm) | 486 | 486 |
| | Presence or absence of defects | Absent | Present |

The T1 in Table 1 is data measured on the point 95 inches (equivalent to 240 cm) away from the end of a spout lip in the direction X, and on a bare surface of tin without the molten glass in the direction Y. The T2 and U respectively indicate data measured on the point 95 inches (equivalent to 240 cm) away from the end of a spout lip in the direction X, and a center point of the direction Y in an up-stream region in the bath. It should be noted that the T1 and T2 are data measured by a radiation thermometer.

In the case of the product thickness of 5 mm, it was found from Table 1 that, by setting the T1 to be 1010 (°C) or less, A becomes 0.5(%) or lower, and defects on the bottom surface disappear.

[Example 2 and Comparative Examples 2 to 3]

In Example 2 and Comparative Examples 2 to 3, float glasses were manufactured in the same manner as in Example 1 except that the temperatures T1 and T2 of the molten tin and the molten glass in the up-stream region in the bath were changed, and the product thicknesses of the float glasses were set to be 3 mm.

Samples were cut out from the produced float glasses in the same manner as in Example 1, and physical properties of the samples were measured. In addition, based on the measurement result, A, Ea, and Ca were calculated. Further, the presence or absence of defects (depressions having a short diameter of 1.5 mm or greater) on the bottom surface of each float glass produced was visually checked. The results and molding conditions of the float glasses are shown in Table 2.

[Table 2]

| | | | Example 2 | Comparative Example 2 | Comparative Example 3 |
|---|---|---|---|---|---|
| Molding conditions | | Product thickness (mm) | 3 | 3 | 3 |
| | | Temperature T1 (°C) | 992 | 1006 | 998 |
| | | Temperature T2 (°C) | 1020 | 1035 | 1025 |
| | | Concentration of hydrogen gas U (volume%) | 3 | 3 | 3 |
| Results | | Ratio A of the amount of elution to the initial amount (%) | 0.41 | 0.76 | 0.51 |
| | | β-OH Ea at the sheet thickness center (mm$^{-1}$) | 0.27 | 0.27 | 0.27 |
| | | Concentration of water Ca at the sheet thickness center (mass ppm) | 486 | 486 | 486 |
| | | Presence or absence of defects | Absent | Present | Present |

The T1, T2, and U in Table 2 are data measured at the same position as the T1, T2, and U of Table 1.

In the case of the product thickness of 3 mm, it was found from Table 2 that, by setting T1 to be 995(°C) or lower, A becomes 0.5(%) or lower, and defects on the bottom surface disappear.

The present invention has been described in detail or with reference to specific embodiments, however, it is obvious to those skilled in the art that the present invention can be variously modified and changed without departing from the gist and the scope of the present invention.

According to the present invention, it is possible to provide high-quality float glass and a method for manufacturing the same.

DESCRIPTION OF REFERENCE NUMERALS AND SIGNS

10    bath
12    outlet of bath
14    inlet of bath
20    molten tin
30    molten glass
40    spout lip
50    heater
60    gas supply pipe
100    float glass
102    bottom surface
104    top surface

**Claims**

1.   A float glass manufactured by causing a molten glass continuously supplied onto a molten tin in a bath to flow on the molten tin toward an outlet of the bath, wherein, when a distance from a first surface which is one surface of both main surfaces of the float glass and is positioned on a side of the molten tin in the bath to an arbitrary position in a sheet thickness direction toward a second surface which is the other surface of the float glass is set to be x (μm), a function of a concentration of water (mass ppm) having x as a variable is set to be C(x), a distance between the both main surfaces of the float glass is set to be D (μm), a distance from the first surface to a position in which the concentration of water is maximum in the sheet thickness direction between the both main surfaces of the float glass is set to be Da (μm), and the concentration of water in the position of Da is set to be Ca (mass ppm),

the float glass satisfies the following formula (1):
[Math. 1]

$$\frac{\int_0^{Da}(Ca-C(x))dx}{Ca\times D}\times 100 \le 0.5 \qquad (1)$$

and wherein the float glass satisfies the following formula (2):
[Math. 2]

$$Ca \ge 470 \qquad (2)$$

and wherein the first surface and the second surface are not polished.

2. A method for manufacturing a float glass, the method including causing a molten glass continuously supplied onto a molten tin in a bath to flow on the molten tin toward an outlet of the bath, wherein an amount of water eluted from the molten glass to the molten tin in the bath is set to be 0.5% or lower of an amount of water in the molten glass immediately before flowing into the bath, wherein a temperature of the molten tin in the bath and/or a temperature of the molten glass in the bath is/are adjusted so that the amount of water eluted from the molten glass to the molten tin in the bath becomes 0.5% or lower of the amount of water in the molten glass immediately before flowing into the bath, wherein the adjustment of the temperature is performed in an up-stream region of the bath, said up-stream region being all regions on the up-stream side of the position 406 cm apart from the down-stream end of a spout lip, which is in the vicinity of a inlet of the bath, in the flow direction of the molten glass.

3. The method for manufacturing a float glass according to claim 2, wherein a concentration of hydrogen gas in an atmosphere inside the bath is adjusted so that the amount of water eluted from the molten glass to the molten tin in the bath becomes 0.5% or lower of the amount of water in the molten glass immediately before flowing into the bath.

4. The method for manufacturing a float glass according to claim 2 or 3, wherein a concentration of water in the molten glass immediately before flowing into the bath is 470 mass ppm or more.

**Patentansprüche**

1. Floatglas, hergestellt durch Bewirken, dass eine Glasschmelze, die kontinuierlich auf eine Zinnschmelze in einem Bad zugeführt wird, auf der Zinnschmelze zu einem Auslass des Bades fließt, wobei, wenn ein Abstand von einer ersten Oberfläche, die eine Oberfläche beider Hauptflächen des Floatglases ist und auf einer Seite der Zinnschmelze in dem Bad positioniert ist, zu einer beliebigen Position in einer Scheibendickenrichtung zu einer zweiten Oberfläche, die die andere Oberfläche des Floatglases ist, als x ($\mu$m) bezeichnet wird, eine Funktion einer Wasserkonzentration (Massen-ppm) mit x als Variable als C(x) bezeichnet wird, ein Abstand zwischen den beiden Hauptflächen des Floatglases als D ($\mu$m) bezeichnet wird, ein Abstand von der ersten Oberfläche zu einer Position, in der die Wasserkonzentration in Scheibendickenrichtung zwischen den beiden Hauptflächen des Floatglases maximal ist, als Da ($\mu$m) bezeichnet wird und die Wasserkonzentration in der Position Da als Ca (Massen-ppm) bezeichnet wird, das Floatglas die folgende Formel (1) erfüllt:
[Math. 1]

$$\frac{\int_0^{Da}(Ca-C(x))dx}{Ca\times D}\times 100 \le 0{,}5 \qquad (1)$$

und wobei das Floatglas die folgende Formel (2) erfüllt:
[Math. 2]

$$Ca \geq 470 \qquad (2)$$

und wobei die erste Oberfläche und die zweite Oberfläche nicht poliert sind.

2. Verfahren zur Herstellung eines Floatglases, wobei das Verfahren das Bewirken, dass eine Glasschmelze, die kontinuierlich auf eine Zinnschmelze in einem Bad zugeführt wird, auf der Zinnschmelze zu einem Auslass des Bades fließt, einschließt,
wobei eine Wassermenge, die aus der Glasschmelze in die Zinnschmelze in dem Bad eluiert wird, eingestellt ist auf 0,5% oder weniger einer Wassermenge in der Glasschmelze unmittelbar vor dem Einströmen in das Bad, wobei eine Temperatur der Zinnschmelze in dem Bad und/oder eine Temperatur der Glasschmelze in dem Bad so eingestellt ist/sind, dass die Wassermenge, die aus der Glasschmelze in die Zinnschmelze in dem Bad eluiert wird, 0,5% oder weniger der Wassermenge in der Glasschmelze unmittelbar vor dem Einströmen in das Bad wird,
wobei das Einstellen der Temperatur in einem stromaufwärts gelegenen Bereich des Bades durchgeführt wird, wobei der stromaufwärts gelegene Bereich alle Bereiche auf der stromaufwärts gelegenen Seite der Position, die 406 cm von dem stromabwärts gelegenen Ende einer Ausgusslippe, die sich in der Nähe eines Einlasses des Bades befindet, in der Strömungsrichtung der Glasschmelze entfernt liegt, ist.

3. Verfahren zur Herstellung eines Floatglases nach Anspruch 2, wobei eine Wasserstoffgaskonzentration in einer Atmosphäre innerhalb des Bades so eingestellt wird, dass die Wassermenge, die aus der Glasschmelze in die Zinnschmelze in dem Bad eluiert wird, 0,5% oder weniger der Wassermenge in der Glasschmelze unmittelbar vor dem Einströmen in das Bad wird.

4. Verfahren zur Herstellung eines Floatglases nach Anspruch 2 oder 3, wobei eine Wasserkonzentration in der Glasschmelze unmittelbar vor dem Einströmen in das Bad 470 Massen-ppm oder mehr beträgt.

**Revendications**

1. Verre flotté fabriqué en faisant en sorte qu'un verre fondu fourni en continu sur un étain fondu dans un bain, s'écoule sur l'étain fondu vers une sortie du bain, dans lequel, lorsqu'une distance à partir d'une première surface qui est une surface des deux surfaces principales du verre flotté et est disposée sur un côté de l'étain fondu dans le bain à une position arbitraire dans la direction de l'épaisseur d'une tôle vers une seconde surface qui est l'autre surface du verre flotté est réglée pour être x ($\mu$m), une fonction d'une concentration de l'eau (ppm en masse) ayant x en tant que variable réglée pour être C(x), une distance entre les deux surfaces principales du verre flotté est réglée pour être D ($\mu$m), une distance à partir de la première surface à une position à laquelle la concentration de l'eau est maximale dans la direction de l'épaisseur d'une tôle entre les deux surfaces principales du verre flotté est réglée pour être Da ($\mu$m), et la concentration de l'eau dans la position de Da est réglée pour être Ca (ppm en masse), le verre fondu satisfait à la formule (1) suivante :
[Math. 1]

$$\frac{\int_0^{Da}(Ca - C(x))dx}{Ca \times D} \times 100 \leq 0.5 \qquad (1)$$

et lequel verre flotté satisfait à la formule (2) suivante :
[Math. 2]

$$Ca \geq 470 \qquad (2)$$

et dans lequel la première surface et la seconde surface ne sont pas polies.

**2.** Procédé pour fabriquer un verre flotté, le procédé incluant le fait de faire en sorte qu'un verre fondu fourni en continu sur un étain fondu dans un bain s'écoule sur l'étain fondu vers une sortie du bain,
dans lequel une quantité d'eau éluée du verre fondu à l'étain fondu dans le bain est réglée pour être 0,5 % ou moins d'une quantité d'eau dans le verre fondu immédiatement avant l'écoulement dans le bain, dans lequel une température de l'étain fondu dans le bain et/ou une température du verre fondu dans le bain est/sont réglée(s) de sorte que la quantité d'eau éluée du verre fondu à l'étain fondu dans le bain devienne 0,5 % ou moins de la quantité d'eau dans le verre fondu immédiatement avant l'écoulement dans le bain,
dans lequel l'ajustement de la température est effectué dans une région amont du bain, ladite région amont du bain étant toutes les régions sur le côté amont de la position à 406 cm de l'extrémité aval d'un bec verseur, qui est dans le voisinage d'une entrée du bain, dans la direction d'écoulement du verre fondu.

**3.** Procédé pour fabriquer un verre flotté selon la revendication 2, dans lequel une concentration d'hydrogène gazeux dans une atmosphère à l'intérieur du bain est ajustée de sorte que la quantité d'eau éluée du verre fondu à l'étain fondu dans le bain devienne 0,5 % ou moins de la quantité d'eau dans le verre fondu immédiatement avant l'écoulement dans le bain.

**4.** Procédé pour fabriquer un verre flotté selon la revendication 2 ou 3, dans lequel une concentration d'eau dans le verre fondu immédiatement avant l'écoulement dans le bain est de 470 ppm en masse ou plus.

Fig. 1

*Fig. 2*

*Fig. 3*

*Fig. 4*

DISTANCE x FROM BOTTOM SURFACE (µm)

EP 2 690 072 B1

## Fig. 5

CONCENTRATION OF WATER (MASS ppm)

DISTANCE x FROM BOTTOM SURFACE (μm)

Fig. 6

## Fig. 7

*Y-axis:* CONCENTRATION OF WATER (MASS ppm)

*X-axis:* DISTANCE x FROM BOTTOM SURFACE (μm)

Legend:
◇ MICRO FT-IR
□ SIMS
— APPROXIMATE CURVE

EP 2 690 072 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009084073 A

- US 20070227190 A1

**Non-patent literature cited in the description**

- **L. A. B. PILKINGTON.** *Proc. Roy. Soc. Lond. A.,* vol. 314, 1-25